# EUROPÄISCHE PATENTANMELDUNG

(11) **EP 2 324 992 A1**
(43) Veröffentlichungstag der Anmeldung: **25.05.2011**
(21) Anmeldenummer: 10188768.5
(22) Anmeldetag: 25.10.2010
(51) Int. Cl.: B29C 65/00, B65D 75/56

(54) **Beutelverpackung**

(30) Priorität: 16.11.2009 DE 202009015448 U
(71) Anmelder: Kunststoffwerk Bossel Gerd Knäpper GmbH & Co. KG, 45549 Sprockhövel-Bossel (DE)
(72) Erfinder: Knäpper, Gerd, 45549 Sprockhövel-Bossel (DE)
(74) Vertreter: Richter, Werdermann, Gerbaulet & Hofmann

(57) **Zusammenfassung**

Beutelverpackung (1') aus Kunststofffolie für Packgut (5'), wie insbesondere Zellstoffprodukte, wobei die Beutelverpackung eine im gefüllten Zustand wenigstens annähernd blockförmige Verpackungshülle (3') zur Aufnahme des Packgutes sowie ein Traggriffteil (2') umfasst, wobei das Traggriffteil (2') und die Verpackungshülle (3') aus einem einteiligen Folienzuschnitt gebildet sind.

## Beschreibung

### Technisches Gebiet

Die Erfindung bezieht sich auf eine Beutelverpackung nach dem Oberbegriff des Anspruchs 1.

### Stand der Technik

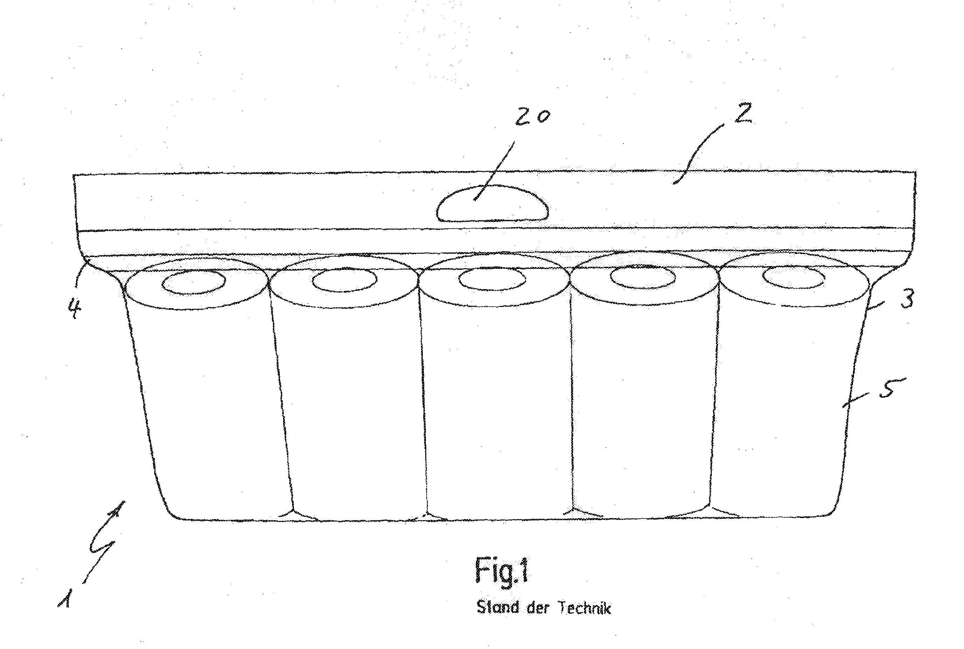

Eine bekannte, aus klarer Kunststoff-Folie hergestellte, Beutelverpackung 1 zeigt Fig. 1 in schematischer, perspektivischer Darstellung, die zur Aufnahme von Gegenständen, wie zum Beispiel Toilettenpapierrollen, Haushaltpapierrollen etc. dient. Ein mit einer eingestanzten Griffausnehmung 20 versehenes Traggriffteil 2 und eine das Packgut 5 umhüllende Verpackungshülle 3 werden jeweils in einem eigenständigen Herstellungsverfahren gefertigt und anschließend zusammengeschweißt. Die in vier Lagen übereinander liegenden Ränder der jeweils doppellagig ausgebildeten Verpackungshülle 3 und des Traggriffteils 2 sind durch eine gemeinsame Schweißnaht 4 zusammengefasst.

### Darstellung der Erfindung: Ausgabe, Lösung, Vorteile

Ausgehend vom vorbeschriebenen Stand der Technik liegt der vorliegenden Erfindung die Aufgabe zugrunde, eine Beutelverpackung der gattungsgemäßen Art dahingehend weiterzubilden, dass deren konstruktive Ausgestaltung vereinfacht ist, ohne Einbußen hinsichtlich der einfachen Handhabbarkeit durch den Verbraucher in Kauf nehmen zu müssen.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile liegen in den verringerten Stückkosten, da die Erfindung die Voraussetzung für ein vereinfachtes und damit rationelleres Verfahren zur Herstellung der Beutelverpackung liefert. Die Verbindung des Traggriffteils mit der Verpackungshülle ist im Vergleich zum Stand der Technik stabiler, so dass auch bei schwererem Verpackungsgut keine Gefahr des Ausreißens des Traggriffs besteht. Die Verbesserungen gegenüber dem Stand der Technik werden erreicht, indem ein Traggriffteil und eine Verpackungshülle aus einem einteiligen Folienzuschnitt gebildet sind.

Gemäß einer Ausgestaltung der Erfindung umfasst die Verpackungshülle einen Umfangswandabschnitt, der vier zumindest im Prinzip im rechten Winkel zueinander angeordnete Wände umfasst, unten von einer Bodenwand und oben von einer Deckenwand verschlossen ist. Dabei ist das Traggriffteil als wenigstens ein überstehender Abschnitt wenigstens einer der Wände gebildet. Dies stellt eine einfache geometrische Form der Verpackungshülle dar, die letztlich hohe Taktzahlen bei der Herstellung der Beutelverpackung aus dem Folienzuschnitt erlaubt. Ferner können die bewährten Verfahren beim Herstellen von Beutelverpackung beibehalten werden.

Bei einer Ausführungsvariante der Erfindung weist der Umfangswandabschnitt zwei sich im Abstand gegenüberliegende längere erste Wände auf, die seitlich durch zwei kürzere Flankenwände miteinander verbunden sind. Dabei ist das Traggriffteil als überstehender Abschnitt an wenigstens einer der ersten Wände gebildet. Dies hat den Vorteil, dass die Beutelverpackung nicht hochkant sondern liegend oder flach getragen wird, wodurch letztlich ein Schleifen der Beutelverpackung auf dem Untergrund vermieden wird.

Gemäß einer Ausführungsform der Erfindung sind ein von der Verpackungshülle definierter Gutinnenraum und das Traggriffteil durch eine Verschlussnaht voneinander abgetrennt. Die Anbringung einer solchen Verschlussnaht ist fertigungstechnisch besonders einfach, da sie mit der Herstellung ohnehin erforderlicher Verschlussnahten nach Umhüllen des Verpackungsgutes durch die Verpackungshülle verbunden werden kann. Ferner entsteht auf diese Weise eine vollkommen dichte Verpackung. Selbstverständlich ist es auch denkbar, den Gutinnenraum durch eine andere Verbindungstechnik, insbesondere eine andere stoffschlüssige Verbindungstechnik, etwa durch Kleben vom Traggriffteil abzutrennen.

Bei einer Ausführungsvariante der Erfindung ist eine in den Gutinnenraum weisende Fläche der Beutelverpackung mit einem Druck versehen, wodurch der Aufdruck gegen Beschädigungen geschützt ist.

Es sind Scanpackbeutel bekannt, bei denen es sich um Beutel mit Griff oder Griffleiste an der langen Seite des Beutels handelt. Hierdurch wird erreicht, dass man den Beutel wie einen Aktenkoffer tragen kann, ohne dass er, wie bei dem Tragegriffbeutel, an der kurzen Seite zu lang ist und damit eventuell über den Boden schleift. Die Befüllung erfolgt von der langen, d, h. breiteren Seite des Beutels, gegenüber dem Griff. Ferner sind Pseudoscanpackkbeutel, also Beutel bekannt, bei denen wie bei "echten" Scanpackbeuteln der Griff oder die Griffleiste an der langen, d.h. breiten, Seite des Beutels vorgesehen ist, mit den daraus resultierenden Vorteilen des Scanpackbeutels, jedoch wird dieser von der kurzen, d.h. schmaleren Seite befüllt. In der Praxis tritt nun das im Folgenden erörterte Problem auf: Der Scanpackbeutel wird, wie nahezu alle anderen Toilettenpapier- oder Küchentuchbeutel, mit einem innen liegenden Druck versehen. Dieser Druck erzeugt einen erheblich besseren Glanz, außerdem wird die äußere Kratzfestigkeit sicher gewährleistet, da die Folie außen ist und somit den innen liegenden Duck gegen Beschädigungen von außen schützt. Der Tragegriff wird auf der breiten Seite von außen auf den Beutel angebracht und verschweißt. Diese Verschweißung ist relativ einfach, da der Griff gegen die nicht für den Druck vorgesehene Außenseite, und die somit nicht druckvorbehandelte Seite, verschweißt wird. Bei einem Pseudoscanbeutel wird der Griff oder die Griffleiste durch eine Abschweißung als Trennung innerhalb des Beutels erreicht, da ein separater Griff so nicht zugeführt wird. Diese Abtrennung erfolgt in einer Art Schrumpfnaht, ähnlich wie bei einem Bodennahtbeutel. Die bisher technisch nicht gelöste Problematik war, dass hierbei, wenn der Beutel einen innenliegenden Druck hat, ein oder zwei druckvorbehandelte Seiten gegeneinander in einer Art Schrumpfnaht sicher - dauerhaft fest - miteinander verbunden werden müssten. Dieses wurde bisher an dieser Art Beutel nicht erreicht. Als eine Art Notlösung wurden bisher derartige Beutel mit einem außen liegenden Druck versehen, damit die Abschweißung gegen nicht vorbehandelte Seiten erfolgen kann. Die zuvor geschilderte Problematik ist überwunden durch eine Beutelverpackung aus Kunststofffolie für Packgut, bei der Seiten der Folie, die zunächst einer Vorbehandlung für eine Bedruckung und später einem Neutralisierungsschritt, in dem die Vorbehandlung neutralisiert wird, unterzogen werden (diese Seiten werden in diesem Text kurz mit druckvorbehandlungsneutralisierte Seiten bezeichnet) aufeinander liegend in der angesprochenen Verschlussnaht zusammengefasst sind. Dies bedeutet mit anderen Worten, dass eine technische Lösung bereitgestellt wird, die es ermöglicht, eine sichere, feste Verbindung zur Abtrennung des Griffs zu erreichen, obwohl der Druck innen liegt. Somit gibt es einen Pseudoscanpackbeutel der wie ein "echter" Scanpackbeutel einen Griff an der langen Seite mit den daraus resultierenden Vorteilen hat und trotzdem bei dem Abpacker von der kurzen Seite befüllt werden kann und einen technischen, wie optischen Vorteil des innen liegenden Druckes hat. An dem neuen Pseudoscanpackbeutel können selbstverständlich, wie bisher, jede Art von Griffleiste oder Griff mit Öffnungshilfen, angebracht werden.

### Kurze Beschreibung der Zeichnungen:

Fig .1 zeigt in schematischer, perspektivischer Darstellung eine bekannte Beutelverpackung; und

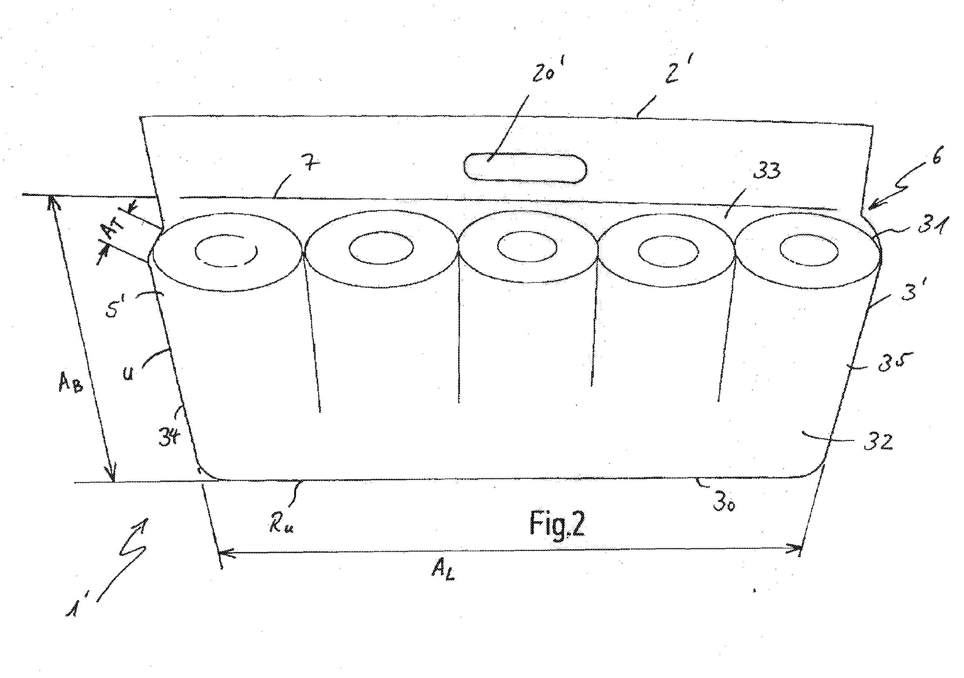

Fig. 2 zeigt eine erfindungsgemäße Beutelverpackung, in schematischer, perspektivischer Darstellung.

### Bevorzugte Ausführungsform der Erfindung

Im Nachfolgenden wird ein Ausführungsbeispiel der Erfindung unter Bezugnahme auf Fig. 2 noch etwas näher beschrieben.

Die aus einer thermisch schweißbaren und/oder verklebbaren klaren Kunststoff-Folie hergestellte erfindungsgemäße Beutelverpackung 1'umfasst eine Verpackungshülle 3', die das Packgut 5' eng an letzterem anliegend umhüllt und so einen annähernd quaderförmigen Gutinnenraum 6 definiert, innerhalb dessen das Packgut 5' angeordnet ist. Bei dem Packgut 5' handelt es sich beispielsweise um Zellstoffprodukte, wie ToilettenpapierRollen, Haushaltpapier-Rollen oder ähnliche Gegenstände, die zusammengefügt oder für sich alleine eine blockförmige Gestalt oder Außenkontur aufweisen.

Die Verpackungshülle 3' weist in gefülltem Zustand eine im Prinzip quaderförmige Gestalt auf und umfasst eine Bodenwand 30, die durch einen im Prinzip rechteckigen unteren Umfangsrand Rᵤ begrenzt ist. Der Bodenwand 30 liegt in einem Abstand eine Deckenwand 31 gegenüber, die parallel zur Bodenwand 30 angeordnet ist.

Ein Umfangswandabschnitt U der Verpackungshülle 3' verbindet den unteren Umfangsrand Rᵤ mit einem die Deckenwand 31 allseits begrenzenden oberen Umfangsrand Rₒ. Der Umfangswandabschnitt U umfasst eine Vorderwand 32 und eine im Abstand parallel zur Vorderwand 32 angeordnete Rückwand 33, die kongruent zur Vorderwand 32 ausgestaltet ist. Der Umfangswandabschnitt U umfasst ferner eine linke Flankenwand 34 und eine im Abstand und parallel zur linken Flankenwand 34 angeordnete rechte Flankenwand 35.

An der Verpackungshülle 3' lässt sich eine dem Abstand zwischen der linken Flankenwand 34 und der rechten Flankenwand 35 entsprechende Längsausdehnung A_{L}, eine dem Abstand zwischen der Deckenwand 31 und der Bodenwand 30 entsprechende Breitenausdehnung A_{B} und eine dem Abstand zwischen der Vorderwand 32 und der Rückwand 33 entsprechende Tiefenausdehnung A_{T} definieren.

Die Längenausdehnung A_{L} ist um einen ersten Faktor größer als die Breitenausdehnung A_{B}. Der Wert des ersten Faktors liegt beispielsweise im Bereich zwischen 1,5 und 4.

Ferner ist die Tiefenausdehnung A_{T} um einen zweiten Faktor kleiner als die Breitenausdehnung A_{B}, was mit anderen Worten bedeutet, dass jede Flankenwand 34, 35 schmaler als die Vorderwand 32 oder die Rückwand ausgebildet ist. Der Wert des zweiten Faktors liegt beispielsweise im Bereich zwischen 1, 5 und 4.

Die Vorderwand 32 und die Rückwand 33 weisen jeweils eine Länge A_{L} auf, die kleiner ist als die Länge A_{B} der Flankenwände 34, 35.

Die erfindungsgemäße Beutelverpackung 1 weist ein Traggriffteil 2' auf, aus dem unter Bildung einer langlochartigen Griffausnehmung 20' mittig ein Teil ausgestanzt ist, das entweder vollständig oder bis auf einen Verbindungsteg vom Traggriffteil 2' abgetrennt ist. Die Griffausnehmung 20' ist als Durchgriff zum Tragen der erfindungsgemäßen Beutelverpackung 1' vorgesehen. Das als überstehender Streifen der Rückwand 33 ausgebildete Traggriffteil 2' erstreckt sich über die gesamte Längsausdehnung A_{L} der erfindungsgemäßen Beutelverpackung 1. Eine Verschlussnaht 7 grenzt das Traggriffteil 2' gegenüber dem Gutinnenraum 6 ab und bildet zugleich den Verschluss des Gutinnenraums 6.

Zur Herstellung der erfindungsgemäßen Beutelverpackung 1 wird zunächst aus einer (nicht dargestellten) Folienbahn ein einziger Zuschnitt abgetrennt, anschließend durch entsprechendes Falten des Zuschnitts und Verbinden freier Ränder des Zuschnitts mittels Schweißens eine schlauchartige Umhüllung des Packguts 5' gebildet und zugleich - ebenfalls durch Schweißen- eine Abtrennung zwischen dem Gutinnenraum 6 und dem Traggriffteil 2' durchgeführt.

Das Packgut 5' wird von einer der Flankenwände 34, 35 her befüllt, was heißt, dass das Packgut 5' sich beim Abpacken in Richtung der Längsausdehnung A_{L} bezüglich der erfindungsgemäßen Beutelverpackung 1 bewegt.

Es wird zur Bildung der Verschlussnaht 7 eine mehrstufige Verschweißung eingesetzt, die im ersten Schritt die Vorbehandlung für den Druck neutralisiert und im zweiten Schritt erst die, nun für die Verschweißung vorbereitete, ehemals vorbehandelte Innenseite gegeneinander verschweißt. Entscheidend ist hierbei die Abstimmung der unterschiedlichen Stufen zueinander und zu der Folie. Das Besondere hierbei ist, dass, mittels dieser mehrstufigen Verschweißung, dauerhaft hochfeste Nähte erzeugt werden können, die der Festigkeit einer nicht vorbehandelten Innenfolie in nichts nach-steht. Die erste Stufe der Verschweißung stellt hierbei die entsprechende Voraussetzung für die spätere sichere Verschweißung dar. Die Besonderheit liegt in der Mehrstufigkeit und der Ausprägung der einzelnen Hitzeeinheiten zueinander und zu der Folie.

**Bezugszeichen**
- 1: bekannte Beutelverpackung
- 1': erfindungsgemäße Beutelverpackung
- 2; 2': Traggriffteil
- 3; 3': Verpackungshülle
- 4: Schweißnaht
- 5;5': Packgut
- 6: Gutinnenraum
- 7: Verschlussnaht
- 30: Bodenwand
- 31: Deckenwand
- 32: Vorderwand
- 33: Rückwand
- 34: linke Flankenwand
- 35: rechte Flankenwand
- Rₒ: oberer Umfangsrand
- Rᵤ: unterer Umfangsrand
- U: Umfangswandabschnitt

## Patentansprüche

1. Beutelverpackung (1; 1') aus Kunststofffolie für Packgut (5; 5'), wie insbesondere Zellstoffprodukte, wobei die Beutelverpackung (1; 1') eine im gefüllten Zustand wenigstens annähernd blockförmige Verpackungshülle (3; 3') zur Aufnahme des Packgutes (5; 5') sowie ein Traggriffteil (2, 2') umfasst, **dadurch gekennzeichnet, dass** das Traggriffteil (2') und die Verpackungshülle (3') aus einem einteiligen Folienzuschnitt gebildet sind.

2. Beutelverpackung (1') nach Anspruch 1, **dadurch gekennzeichnet, dass** die Verpackungshülle (3') einen Umfangswandabschnitt (U) aufweist, der vier zumindest im Prinzip im rechten Winkel zueinander angeordnete Wände (32, 33, 34, 35) umfasst, unten von einer Bodenwand (30) und oben von einer Deckenwand (31) verschlossen ist, wobei das Traggriffteil (2') als wenigstens ein überstehender Abschnitt wenigstens einer der Wände (30, 31, 32, 33, 34, 35) gebildet ist.

3. Beutelverpackung (1') nach Anspruch 2, **dadurch gekennzeichnet, dass** der Umfangswandabschnitt (U) zwei sich im Abstand gegenüberliegende längere erste Wände (32, 33) aufweist, die seitlich durch zwei kürzere Flankenwände (34, 35) miteinander verbunden sind, wobei das Traggriffteil (2) als überstehender Abschnitt an wenigstens einer der ersten Wände (32, 33) gebildet ist.

4. Beutelverpackung (1') nach den Ansprüchen 1, 2 oder 3, **dadurch gekennzeichnet, dass** ein von der Verpackungshülle (3') definierter Gutinnenraum (6) und das Traggriffteil (2') durch eine Verschlussnaht (7) voneinander abgetrennt sind.

5. Beutelverpackung (1') nach wenigstens einem der vorangehenden Ansprüche, **dadurch gekennzeichnet, dass** eine in den Gutinnenraum (6) weisende Fläche der Beutelverpackung mit einem Druck versehen ist.

6. Beutelverpackung (1;1')aus Kunststofffolie für Packgut (5; 5'), wie insbesondere Zellstoffprodukte, wobei die Beutelverpackung (1; 1') eine im gefüllten Zustand wenigstens annähernd blockförmige Verpackungshülle (3; 3') zur Aufnahme des Packgutes (5; 5') sowie ein Traggriffteil (2, 2') umfasst, wobei ein von der Verpackungshülle (3') definierter Gutinnenraum (6) und das Traggriffteil (2') durch eine Verschlussnaht (7) voneinander abgetrennt sind, insbesondere nach einem der Ansprüche 1 bis 5, **dadurch gekennzeichnet, dass** druckvorbehandlungsneutralisierte Seiten der Folie aufeinander liegend in der Verschlussnaht zusammengefasst sind.
